# EUROPEAN PATENT APPLICATION

(11) **EP 4 818 994 A1**
(43) Date of publication of application: **07.10.2026**
(21) Application number: 25167562.5
(22) Date of filing: 31.03.2025
(51) Int. Cl.: G06Q 10/02, B60R 25/24, G06Q 50/43, G07C 9/00

(54) **A VEHICLE DIGITAL ACCESS MANAGEMENT SYSTEM**

(71) Applicant: Zhejiang Geely Holding Group Co., Ltd., Hangzhou, Zhejiang 310051 (CN); Zhejiang Zeekr Intelligent Technology Co., Ltd, Ningbo City Zhejiang (CN)
(72) Inventor: LINDBERG NILSSON, Erik, 417 47 GÖTEBORG (SE); SETTERBERG, Johan, 416 79 GÖTEBORG (SE); GARDTMAN, Angelika, 412 49 GÖTEBORG (SE)
(74) Representative: Zacco Sweden AB

(57) **Abstract**

A vehicle digital access management system comprising: a data memory system (7) located in the vehicle (5) and configured to store booking data of a first regular vehicle booking (1) including a digital key and a first vehicle access time period, and booking data of a second regular vehicle booking (2) including a digital key and a second vehicle access time period; a short-range wireless communication device (12) located in the vehicle (5) and configured for establishing wireless communication with a user equipment (8); a local access handling unit (9) located in the vehicle (5). The local access handling unit (9) is configured to perform an offline removal of vehicle access from the first regular vehicle booking (1) upon detecting that a vehicle access event of the first regular vehicle booking (1) has ended based on input from at least one vehicle access sensor (14) or a user interface (22, 29), or that the first vehicle access time period stored in the data memory system has ended. The local access handling unit (9) is configured to subsequently give an offline vehicle access to the second regular vehicle booking (2) upon detecting a digital key of the user equipment (8) by means of the short-range wireless communication device (12), verifying that the detected digital key authorizes vehicle access based on the digital key of the second booking stored in the data memory system, and verifying that the second vehicle access time period stored in the data memory system has started.

## Description

### TECHNICAL FIELD

The present disclosure relates to a vehicle digital access management system and a method for managing a vehicle digital access system.

The vehicle digital access management system according to the disclosure is arranged for managing the access to various parts of a vehicle using a digital key, such as a digital code or the like that is submitted from a user equipment to the vehicle for getting access to the vehicle, in particular during vehicle sharing or borrowing or rental events when a user is requesting access to a vehicle that belongs to someone else.

The vehicle digital access management system is herein described primarily in relation to a car, but the vehicle digital access management system according to the disclosure is not restricted to this particular type of vehicle, but may as well be installed or implemented in another type of vehicle, such as a truck, a bus, a rail vehicle, a flying vehicle, a marine vessel, an off-road vehicle, a mining vehicle, an agriculture vehicle, a working vehicle such as a wheel loader or excavator, a forest vehicle such as harvesters or forwarders, a motorcycle or the like.

### BACKGROUND

In the field of vehicle digital access management systems during car sharing or borrowing or rental events, vehicle access is often handled by a central access management server.

A user may for example submit a request to borrow or rent a specific vehicle by means of a user equipment, such as a mobile phone. The request is submitted to the central access management server. If the central access management server grants the request, the central access management server sends to the user equipment a digital key that enables vehicle access and usage. When the vehicle subsequently receives an access request, including a digital key, from a nearby user equipment, the vehicle submits an authentication request to the central access management server for verifying that the received digital key is valid, and if the central access management server approves the digital key, the vehicle gives the user of the user equipment access to the vehicle.

This access management system mostly works well but is dependent in a reliable wireless communication channel between the vehicle and central access management server. In certain scenarios, such wireless communication channel is not provided, thereby rendering the vehicle access management inoperable.

There is thus a need for an improved vehicle access management system that is operational also in conditions when a wireless communication channel between the vehicle and central access management server is not provided.

### SUMMARY

An object of the present disclosure is to provide a vehicle digital access management system and associated method where the previously mentioned problems are avoided. This object is at least partly achieved by the features of the independent claims. The dependent claims contain further developments of the vehicle digital access management system and associated method.

According to a first aspect of the present disclosure, there is provided a vehicle digital access management system comprising: a data memory system located in the vehicle and configured to store booking data of a first regular vehicle booking including a digital key and a first vehicle access time period, and booking data of a second regular vehicle booking including a digital key and a second vehicle access time period; a short-range wireless communication device located in the vehicle and configured for establishing wireless communication with a user equipment; a local access handling unit located in the vehicle; wherein the local access handling unit is configured to perform an offline removal of vehicle access from the first regular vehicle booking upon detecting that a vehicle access event of the first regular vehicle booking has ended based on input from at least one vehicle access sensor or a user interface, or that the first vehicle access time period stored in the data memory system has ended; and wherein the local access handling unit is configured to subsequently give an offline vehicle access to the second regular vehicle booking upon detecting a digital key of the user equipment by means of the short-range wireless communication device, verifying that the detected digital key authorizes vehicle access based on the digital key of the second booking stored in the data memory system, and verifying that the second vehicle access time period stored in the data memory system has started.

In this way, it becomes possible to reliably shift between regular bookings of a vehicle in an offline operating mode, in a mode without a functional wireless wide area communication network. This may for example occur when parking in an underground garage or in a rural area with poor wireless connectivity.

Further advantages are achieved by implementing one or several of the features of the dependent claims.

In some example embodiments, that may be combined with any one or more of the above-described embodiments, an identity of the digital key of the first regular vehicle booking is the same as the identity of the digital key of the second regular vehicle booking. Thereby, the memory space required for storing digital key in the vehicle data memory system is significantly reduced. This may be specifically important when the digital key must be stored in a secure environment, which generally has a very limited storage space.

In some example embodiments, that may be combined with any one or more of the above-described embodiments, the booking data of the first regular vehicle booking further includes at least one predetermined vehicle use limitation rule, and wherein the local access handling unit is configured to perform an offline removal of vehicle access from the first regular vehicle booking upon detecting violation of the at least one predetermined vehicle use limitation rule of the first regular vehicle booking stored in the data memory system.

Similarly, in some example embodiments, the booking data of the second regular vehicle booking further includes at least one vehicle use limitation rule, and wherein the local access handling unit is configured to perform an offline removal of vehicle access from the second regular vehicle booking upon detecting violation of the at least one predetermined vehicle use limitation rule of the second regular vehicle booking stored in the data memory system.

Removal of vehicle access may be an effective solution for stopping for example a theft of the vehicle, or the like, without introducing a safety risk for other people travelling adjacent the vehicle, because removal of access does not necessarily mean that the vehicle is immediately stopping along the road and turning into a dangerous obstacle.

In some example embodiments, that may be combined with any one or more of the above-described embodiments, the predetermined vehicle use limitation rule is maximal geographical drive area, and wherein the local access handling unit is configured to detect violation of the maximal geographical drive area based on vehicle geographic positioning detected using camera or Lidar sensor data. This is particularly effective for stopping vehicle theft where the vehicle GPS-received has been disabled or blocked or the like.

In some example embodiments, that may be combined with any one or more of the above-described embodiments, the data memory system is configured to store booking data of at least one permanent emergency service provider booking including a digital key, wherein the local access handling unit is configured to perform an offline grant of vehicle access to the at least one emergency service provider booking upon detecting a digital key of the user equipment by means of the short-range wireless communication device and verifying that the detected digital key authorizes vehicle access based on the digital key of the permanent emergency service provider booking stored in the data memory system. The enables access to the vehicle by the emergency service provider without first arranging a regular booking, which may be time consuming and also very complicated without a functional wireless wide area communication network at the position of the vehicle. By having booking data of at least one permanent emergency service provider pre-stored in the vehicle data memory is thus highly advantageous.

In some example embodiments, that may be combined with any one or more of the above-described embodiments, the at least one permanent emergency service provider booking has a higher priority than a regular vehicle booking, and wherein the local access handling unit is configured to upon detecting a digital key of a user equipment by means of the short-range wireless communication device and performing an offline verification that the detected digital key authorizes vehicle access based on the digital key of the permanent emergency service provider booking stored in the data memory system, performing an offline shift of vehicle access from the current regular vehicle booking to the at least one emergency service provider booking based on the higher priority of the at least one permanent emergency service provider booking. As a result, the emergency service provider will always have access to the vehicle, also when someone else currently has access to the vehicle.

In some example embodiments, that may be combined with any one or more of the above-described embodiments, the local access handling unit is configured to, upon detecting occurrence of a predetermined event based condition and subsequently detecting a digital key of a user equipment by means of the short-range wireless communication device that authorizes vehicle access based on the digital key of the permanent emergency service provider booking stored in the data memory system, performing an offline shift of vehicle access from the current regular vehicle booking to the at least one emergency service provider booking. The predetermined event-based condition may for example be a vehicle accident or vehicle breakdown. As a result, the emergency service provider will always have access to the vehicle, also when someone else currently has access to the vehicle.

In some example embodiments, that may be combined with any one or more of the above-described embodiments, an identity of the digital key of a regular vehicle booking is different from the identity of the digital key of the at least one permanent emergency service provider booking. This enables simple and quick distinction for the access handling unit of the vehicle between a regular user and an emergency service provider.

In some example embodiments, that may be combined with any one or more of the above-described embodiments, the system further comprises a central access management server configured for receiving and handling vehicle booking request from users, wherein the local access handling unit is configured to, upon establishing a communication channel with the central access management server, downloading booking data of a vehicle bookings to the data memory system.

In some example embodiments, that may be combined with any one or more of the above-described embodiments, the vehicle digital access management system is configured to give vehicle access to a new regular booking when the following conditions are fulfilled: vehicle is parked and locked, vehicle is no longer allocated to the previous regular booking and no digital key of previous booking is detected.

In some example embodiments, that may be combined with any one or more of the above-described embodiments, the data memory system is configured to store booking data of a permanent vehicle owner booking including a digital key, and the local access handling unit is configured to perform an offline grant of vehicle access to the vehicle owner booking upon detecting a digital key of the user equipment by means of the short-range wireless communication device and verifying that the detected digital key authorizes vehicle access based on the digital key of the permanent vehicle owner booking stored in the data memory system. This enables quick and smooth access for the vehicle owner, without need for first submitting a regular booking of the vehicle.

In some example embodiments, that may be combined with any one or more of the above-described embodiments, the central access management server, upon receiving a request from emergency service provider for providing access to a specific vehicle, is configured for sending a digital key of the permanent emergency service provider booking stored in the data memory system of said specific vehicle to a user equipment of said emergency service provider. Thereby, the emergency service provider(s) do not need to store all digital key for a large number of vehicles in a data memory system of emergency service provider(s).

In some example embodiments, that may be combined with any one or more of the above-described embodiments, the at least one vehicle access sensor is configured for detecting that a vehicle access event of the first regular vehicle booking has ended is a vehicle door sensor, vehicle luggage compartment sensor, a vehicle passenger occupancy sensor, a key detector sensor. Thereby, the vehicle can with good accuracy autonomously determine when a user has left the vehicle, and the vehicle can remove access from the vehicle from said user.

The present disclosure also relates to a vehicle comprising the vehicle digital access management system as described above.

According to a second aspect of the present disclosure, there is provided a method for managing a vehicle digital access system comprising: detecting ending of a vehicle access event of a first regular vehicle booking stored in a data memory system located in the vehicle based on input from at least one vehicle access sensor or a user interface, or based on ending of the first vehicle access time period stored in the data memory system; performing an offline removal of vehicle access from the first regular vehicle booking by means of a local access handling unit located in the vehicle; detecting a digital key of a user equipment by means of a short-range wireless communication device located in the vehicle, verifying that the detected digital key authorizes vehicle access based on the digital key of the second booking stored in a data memory system located in the vehicle, and verifying that the second vehicle access time period stored in the data memory system has started; giving offline vehicle access to a second regular vehicle booking stored in the data memory system by the local access handling unit.

In this way, it becomes possible to reliably shift between regular bookings of a vehicle in an offline operating mode, in a mode without a functional wireless wide area communication network. This may for example occur when parking in an underground garage or in a rural area with poor wireless connectivity.

Further advantages are achieved by implementing one or several of the features of the dependent claims.

In some example embodiments, that may be combined with any one or more of the above-described embodiments, the method further comprises: detecting a violation of at least one predetermined vehicle use limitation rule of the first regular vehicle booking stored in the data memory system, and performing an offline removal of vehicle access from the first regular vehicle booking by the local access handling unit; or detecting violation of at least one predetermined vehicle use limitation rule of the second regular vehicle booking stored in the data memory system, and performing an offline removal of vehicle access from the second regular vehicle booking by the local access handling unit.

In some example embodiments, that may be combined with any one or more of the above-described embodiments, the data memory system includes booking data of at least one permanent emergency service provider booking including a digital key, wherein the method comprises detecting a digital key of the user equipment by means of the short-range wireless communication device and verifying that the detected digital key authorizes vehicle access based on the digital key of the permanent emergency service provider booking stored in the data memory system, performing an offline grant of vehicle access to the at least one emergency service provider booking by the local access handling unit.

In some example embodiments, that may be combined with any one or more of the above-described embodiments, the method includes detecting a digital key of a user equipment by means of the short-range wireless communication device and performing an offline verification that the detected digital key authorizes vehicle access based on the digital key of the permanent emergency service provider booking stored in the data memory system, performing an offline shift of vehicle access from the current regular vehicle booking to the at least one emergency service provider booking by the local access handling unit based on a higher priority of the at least one permanent emergency service provider booking compared with a regular vehicle booking.

In some example embodiments, that may be combined with any one or more of the above-described embodiments, the method comprises detecting occurrence of a predetermined event based condition and subsequently detecting a digital key of a user equipment by means of the short-range wireless communication device that authorizes vehicle access based on the digital key of the permanent emergency service provider booking stored in the data memory system, performing an offline shift of vehicle access from the current regular vehicle booking to the at least one emergency service provider booking.

In some example embodiments, that may be combined with any one or more of the above-described embodiments, the method further comprises: detecting a digital key of a user equipment by means of the short-range wireless communication device; verifying that the detected digital key authorizes vehicle access based on a digital key of a permanent vehicle owner booking stored in the data memory system; performing an offline grant of vehicle access to the vehicle owner booking by the local access handling unit.

In some example embodiments, that may be combined with any one or more of the above-described embodiments, the method further comprises: receiving a request in the central access management server from emergency service provider or vehicle recovery assistance provider for providing access to a specific vehicle, and sending a digital key of the permanent emergency service provider booking stored in the data memory system of said specific vehicle from the central access management server to a user equipment of said emergency service provider or vehicle recovery assistance provider.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The vehicle digital access management system and associated method according to the disclosure will be described in detail in the following, with reference to the attached drawings, in which
- Fig. 1: shows schematically a booking schedule of the vehicle access handling unit;
- Fig. 2: shows a user approaching a vehicle and the user equipment is communicating with the access handling unit;
- Fig. 3: shows the same as figure 2 in a more functional way;
- Fig. 4: shows an example embodiment of a process of booking a vehicle;
- Fig. 5: shows an event chart with interaction between first user, second user, a vehicle and a server;
- Fig. 6: shows schematically a further example embodiment of a booking schedule of the vehicle access handling unit;
- Fig. 7: shows an event chart with interaction between first user, an emergency provide, a vehicle and a server;
- Fig. 8: shows a further event chart with interaction between first user, the emergency provide, a vehicle and a server;
- Fig. 9-11: show three basic flow charts for offline shift of access to a vehicle.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments but are applicable on other variations of the disclosure.

Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

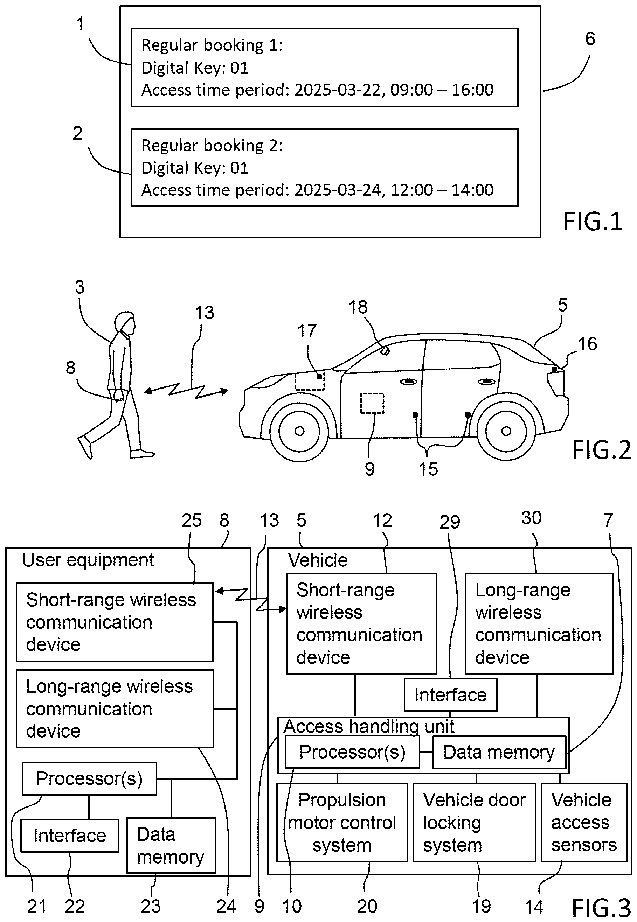

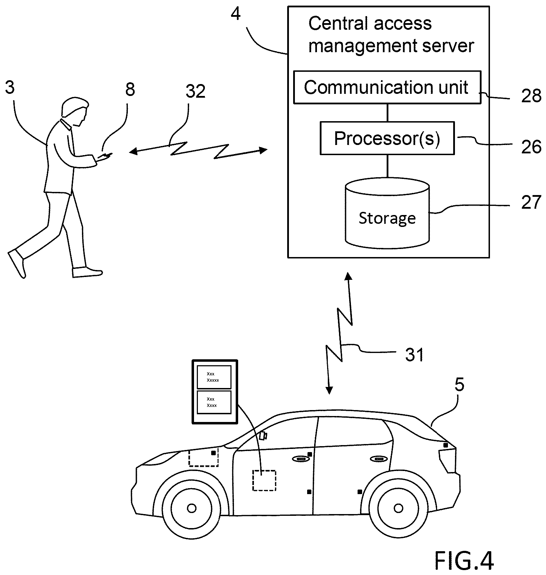

A first example embodiment of the vehicle digital access management system of the present disclosure is described below with reference to figures 1 to 4.

The vehicle digital access management system enables offline change of access from a first regular booking 1 to a second regular booking 2, i.e. shift of access from a first user 3 to a second user without requiring data communication with a remote server 4, such as a central access management server. This is beneficial in situations when the first user 3 after completed vehicle usage happens to park the vehicle 5 at a location where the vehicle 5 cannot establish data communication with the remote server 4, such as for example in an underground parking garage, or at a rural location with poor cellular connectivity, or the like.

The solution involves detection of termination of the first regular booking 1, performing offline ending of vehicle access for a user of the first regular booking 1, and subsequently upon receiving request for vehicle access by a user of the second booking 2, granting offline access to the user of the second regular booking 2 based on booking information pre-stored in for example a booking schedule 6 of a local data memory system 7 of the vehicle 5.

Figure 1 schematically illustrates an example of vehicle booking schedule 6 stored in a data memory system 7 located in a vehicle 5 available for sharing, borrowing, renting, or the like. The booking schedule 6 stores booking data of the first regular vehicle booking 1 including a digital key, such as "01" and a first vehicle access time period, such as for example 2025-03-22, 09:00 - 16:00.

The vehicle booking schedule 6 also stores booking data of a second regular vehicle booking 2 including a digital key, such as "01", and a second vehicle access time period, such as for example 2025-03-24, 12:00 - 14:00

In some example embodiments, the first and second digital key identities may be identical, i.e. the same digital key is used for both the first and second booking. This has the advantage of reducing the total number of individual digital keys required for a set of regular vehicle bookings, thereby reducing the required data memory space required for storing the digital keys in the vehicle, reducing the quantity of data that is being sent to the vehicle from the central access management server 4, and also limiting the total amount digital keys in circulation, thus reducing risk that a digital key is somehow lost. Digital keys must typically be saved in a dedicated secure data memory portion of the vehicle data memory system 7 and may thereby have a very small storage space, such as for example about 1 MB, thereby limiting the total number of digital keys to about ten.

In a scenario where the same digital key is used for both the first and second booking, each regular booking may be provided with additional data corresponding to a user identity or user equipment identity or the like, for enabling distinction between the first and second user/booking.

However, in other scenarios the first and second digital key identities may have different key identities, thereby rendering distinction between the first and second digital keys easy.

Figure 2 schematically shows a scenario where a first user 3 with a user equipment (UE) 8, such as a mobile phone, smart key card, smart key fob, or the like, approaches a sharing or rental vehicle 5 that has been previously booked by for example the first user 3.

Figure 3 shows the same scenario as figure 2 but in a more schematic illustration. In this example embodiment, the vehicle 5 includes an access handling unit 9 that includes or at least is connected to a processing unit 10 and a data memory system 7 that for example may be used for storing the local booking schedule 6, as well as a vehicle digital key that is required for authentication of the digital key carried by the user.

Hence, the users may have one or more digital keys that give access to a vehicle 5, and the access handling unit 9 of the vehicle has one or more corresponding vehicle digital keys that are used for authenticating, i.e. validating, the digital keys of the users. If a user can present a digital key that matches one of the digital keys of the access handling unit, the access handling unit 9 will give access to the vehicle. The digital keys of the vehicle are more or less permanently stored in the vehicle and only changed during occasional reconfiguration, updating, or the like. The digital keys of the users that borrow that the vehicle may be permanently stored in the central access management server 4, and the digital key of the owner may be permanently stored in the user equipment 8 of the owner.

The access handling unit 9 is operably connected to a short-range wireless communication device 12 for establishing wireless data communication 13 with adjacent user equipment 8 of various users. The short-range wireless communication 13 is implemented based on a standard, such as for example Bluetooth, Ultra-Wideband, Near Field Communication (NFC), or the like.

The access handling unit 9 is operably connected to a long-range wireless communication device 30 for establishing a long-range wireless data communication 31 with the central access management server 4. The long-range wireless communication device 30 is for example a cellular wireless modem, such as a 5G modem or the like.

The remote central access management server 4 is configured for receiving and handling vehicle booking request from users, and the local access handling unit 9 is configured to, upon establishing a communication channel with the central access management server 4, downloading booking data of vehicle bookings to the data memory system 7 of the vehicle 5. The communication channel between the remote central access management server 4 and the local access handling unit 9 is at least partly provided by a wireless long-range established by the long-range wireless communication device 30.

The access handling unit 9 is also operably connected to a set of vehicle access sensors 14 for assisting the access handling unit 9 to determine that an access event is ongoing or has ended. The vehicle access sensors 14 include for example vehicle door sensors 15, vehicle luggage compartment sensor such as vehicle trunk sensor 16 and vehicle frunk sensor 17, vehicle passenger occupancy sensor 18, a digital key detector sensor, etc. The digital key detector sensor is arranged to detect whether the approved digital key is still available in the vicinity of the vehicle and may for example be implemented in form of the short-range wireless communication device 12 of the vehicle 5 that periodically checks the presence of the approved digital key.

Furthermore, the access handling unit 9 is operably connected to a vehicle door locking system 19 for controlling access to the vehicle 5, and a propulsion motor control system 20 for controlling access to vehicle driving.

The vehicle door locking system 19 includes for example electric actuators that are installed for controlling the door locking mechanism, truck locking mechanism, frunk locking mechanism, etc.

The propulsion motor control system 20 typically includes motor controller and transmission controller of an ICE vehicle, or inverter and BMS controller of a battery electric vehicle.

Consequently, the access handling unit 9 control the level of access to the vehicle depending on the level of access of each specific booking. A first booking may for example include access to passenger cabin and trunk, and enabling driving with the vehicle, while a second booking for example only include access to the trunk.

Consequently, in those example embodiments where each booking may include individual access levels, details specifying the access level of each booking is typically linked to each booking and available for the access handling unit.

The user equipment (UE) 8 of the user, such as a mobile phone, typically includes features such as an electronic processing unit 21 that is operably connected to an interface 22, such as a touch screen, a data memory system 23, a long-range communication device 24, such as a cellular wireless modem, that may establish a long range communication channel 32 with the central access management server 4. The user equipment (UE) 8 further includes a short-range communication device 25, such as for example Bluetooth transceiver device, Ultra-Wideband transceiver device, Near Field Communication (NFC) device, or the like for providing short-range wireless communication 13 with the vehicle 5.

The central access management server 4 may for example include an electronic processing unit 26 that is operably connected to a data memory 27 and a long-range communication device 28, such optical transmitter and receiver of a fibre connectivity device, which may establish high-speed and efficient connections between the server and a plurality of base station of a cellular wireless network using fibre optic cables, and wherein a base station of a cellular wireless network may establish a wireless communication channel with the vehicle 5 for downloading the booking schedule, etc.

Vehicle bookings by users are for example generated by means of the user equipment (e.g. mobile phone) 8 of a user 3 and submitted to the central access management server 4 associated with a specific vehicle. The central access management server 4 handles all booking requests and establishes a booking schedule that is continuously updated as new bookings are received, and old bookings are removed, etc. At certain time instances, such as for example at regular intervals and/or when the booking schedule 6 is updated, an update of the booking schedule 6 is transmitted from the central access management server to the vehicle 5, such that a local version of the vehicle booking schedule 6 stored within the vehicle 5 is updated. Thereby, booking information of future booking events are pre-stored in a local data memory system 7 of the vehicle 5 and readily available also when the vehicle is offline.

For obtaining access to the vehicle 5, the user equipment 8 of the first user 3 establishes a digital wireless communication channel with the vehicle 5 and the digital key stored in a data memory system 23 of the user equipment 8 is authenticated by a vehicle digital key stored in the data memory system 7 of the vehicle 5. For example, the digital key stored in a data memory system 23 of the user equipment 8 is authenticated by a vehicle digital key stored in the data memory system 7 of the vehicle 5 when the digital key of the user equipment 8 matches the correspond digital key stored in the vehicle.

In a scenario where the user of the first regular booking decided to park the vehicle at a location where no digital communication between the vehicle and the central access management server can be established, i.e. an offline location, a local access handling unit of the vehicle is configured to perform an offline removal of vehicle access from the first regular vehicle booking upon detecting that the vehicle access event of the first regular vehicle booking has ended. This may for example be performed based on input from one or more vehicle access sensors 14, such as vehicle occupancy sensor 18 and/or door sensors 15, that detects that vehicle is empty and/or doors are closed. Moreover, the access handling unit 9 may also determine using for example the short-range wireless communication device 12 of the vehicle for determining that no digital key is available within the vehicle.

Alternative, the local access handling unit 9 of the vehicle 5 may be configured to detect that the vehicle access event of the first regular vehicle booking 1 has ended based on user input provided via a user interface 29 of the vehicle 5 or user interface 22 of the user equipment 8. In other words, the user of the first booking may input on a user interface 22 of his/her mobile phone, or a user interface 29 of the vehicle 5, that the vehicle booking event has ended.

According to yet a further alternative, the local access handling unit 9 of the vehicle 5 may be configured to detect that the vehicle access event of the first regular vehicle booking 1 has ended based on termination of the first vehicle access time period, which is part of the booking schedule 6 that is stored in the data memory system 7 of the vehicle 5.

After offline detection of the ending of the first regular booking 1 and the resulting removal of vehicle access from the first regular vehicle booking, as described above, the local access handling unit 9 is configured to subsequently give an offline access to a user of the second regular vehicle booking 2.

Specifically, the vehicle access to the user of the second regular vehicle booking is given to the user of the second regular booking upon detecting a digital key of the user equipment of the second user, and verification that the detected digital key authorizes vehicle access based on the vehicle digital key of the second booking stored in the data memory system 7 of the vehicle 5, and verification that the second vehicle access time period stored in the data memory system 7 has started.

In other words, with reference to figures 1 to 4, the vehicle digital access management system comprises a data memory system 7 located in the vehicle 5 and configured to store booking data of a first regular vehicle booking 1 including a digital key and a first vehicle access time period, and booking data of a second regular vehicle booking 2 including a digital key and a second vehicle access time period.

The vehicle digital access management system comprises a short-range wireless communication device 12 located in the vehicle 5 and configured for establishing wireless communication with a user equipment (UE) 8.

Moreover, the vehicle digital access management system comprises a local access handling unit 9 located in the vehicle. The local access handling unit 9 is configured to perform an offline removal of vehicle access from the first regular vehicle booking 1 upon detecting that a vehicle access event of the first regular vehicle booking 1 has ended based on input from at least one vehicle access sensor 14 or based on input provided by the user of the first regular vehicle booking 1 via a user interface 22, 29, or upon detecting that the first vehicle access time period stored in the data memory system 7 has ended.

After removal of vehicle access, the user of the first regular vehicle booking 1 can no longer start engine or open door/trunk/frunk from outside.

The local access handling unit 9 is also configured to subsequently give an offline vehicle access to the second regular vehicle booking 2 upon detecting a digital key of a user equipment of a second user by means of the short-range wireless communication device 12, verifying that the detected digital key authorizes vehicle access based on the digital key of the second booking 2 stored in the data memory system 7, and verifying that the second vehicle access time period stored in the data memory system 7 has started.

According to some example embodiments, the vehicle digital access management system is configured to give vehicle access to a new regular booking when the following conditions are fulfilled: the vehicle 5 is parked and locked, the vehicle 5 is no longer allocated to the previous regular booking and no digital key of previous booking is detected by the vehicle 5, for example based on the short-range wireless communication device 12.

The vehicle gives access to a user of the second regular vehicle booking 2 by for example operating the door unlocking actuators for unlocking the doors and trunk/frunk and also enabling operation of the vehicle propulsion motor.

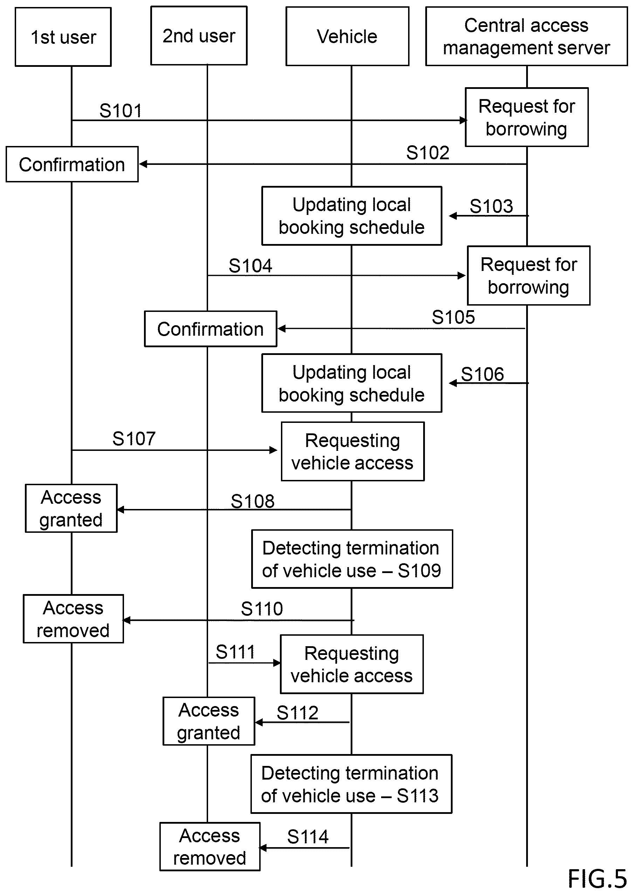

An example embodiment of the basic functionality of the vehicle digital access management system will be described in another form with reference to figure 5, which shows an event flow chart for various entities over time. This example embodiment includes first and second users that sequentially borrows a vehicle that is available for sharing.

At a first event S101 the first user 3 submits a request to borrow the vehicle 5 via for example a user equipment 8 of the first user 3. The request is submitted to the central access management server 4 that checks availability of the vehicle 5, and possibly also other aspects, and submits as a second event S102 a booking confirmation of a first booking to the user equipment 8 of the first user 3, as well as a digital key for the vehicle 5, or at least data for generating a digital key to the vehicle 5. The central access management server 4 also at a third event S103 submits information about the first booking to a local booking schedule 6 of the vehicle 5, for keeping the local booking schedule 6 updated.

Similarly, at a fourth event S104 the second user submits a request to borrow the vehicle 5 via for example a user equipment 8 of the second user. The request is submitted to the central access management server 4 that checks availability of the vehicle 5, and possibly also other aspects, and submits as a fifth event S105 a booking confirmation of a second booking to the user equipment 8 of the second user, as well as a digital key for the vehicle 5, or at least data for generating a digital key to the vehicle 5. The central access management server 4 also at a sixth event S106 submits information about the second booking to a local booking schedule 6 of the vehicle 5, for keeping the local booking schedule 6 updated.

Subsequently, at a seventh event S107 the first user 3 arrives at the vehicle 5 and the user equipment 8 of the first user 3 establishes a digital wireless communication channel with the vehicle 5 and the access handling unit 9 of the vehicle authenticates the digital key stored in a data memory system 23 of the user equipment 8 by means of a vehicle digital key stored in the data memory system 7 of the vehicle 5.

In response to a positive authentication of the digital key of the user equipment 8 of the first user 3 (first booking), the vehicle access handling unit 9 at an eighth event S108 gives access to the user of the first booking. In practice, this means that the vehicle access handling unit 9 gives access to the vehicle by submitting appropriate instructions to the vehicle door locking system 19 and/or propulsion motor control system, etc.

No communication with the central access management server 4 is required for giving the user of the first booking access to the vehicle. In other word, the vehicle access is given offline to the user of the first booking.

The access handling unit 9 may subsequently, at a ninth event S109, be arranged to autonomously detect ending of a vehicle access event of the first regular vehicle booking. This may for example be performed by the access handling unit 9 detecting signs of termination of the vehicle use by the user of the first booking, such as input from at least one vehicle access sensor 14 that user has left the vehicle, and/or based on input from the short-range wireless communication device 12 that digital key has left the vehicle.

Alternatively, or in combination with above, the access handling unit 9 may determine that the usage has ended based on ending of the first vehicle access time period stored in the data memory system.

Still more alternatively, the access handling unit 9 may determine that the usage has ended based on user input on the user interface 29, e.g. touch screen, of the vehicle 5, or based on user input on the user interface 22, e.g. touch screen, of the user equipment 8.

In response to detecting ending of a vehicle access event of the first regular vehicle booking, the access handling unit 9 at a tenth event S110 removes vehicle access from the user of first regular vehicle booking. As a result, the user of the first booking can no longer open the vehicle doors from the outside and also not drive the vehicle because the propulsion motor is not operative.

No communication with the central access management server 4 is required for removing vehicle access from the user of the first booking. In other word, the vehicle access of the first booking is removed offline in the tenth event S110.

The following eleventh to fourteenth events S111-S114 describing the access and removal of access of a second user (second booking) may be substantially identical to the seventh to tenth events S107-S110 describing the access and removal of access of the first user. In short, at the eleventh event S111 the second user arrives at the vehicle 5 and the user equipment 8 of the second user establishes a digital wireless communication channel with the vehicle 5 and the access handling unit 9 of the vehicle authenticates the digital key stored in a data memory system 23 of the user equipment 8 by means of a vehicle digital key stored in the data memory system 7 of the vehicle 5.

In response to a positive authentication of the digital key of the user equipment 8 of the second user (second booking), the vehicle access handling unit 9 at a twelfth event S112 gives access to the user of the second booking.

No communication with the central access management server 4 is required for giving the user of the second booking access to the vehicle.

The access handling unit 9 subsequently at a thirteenth event S113 detects ending of a vehicle access event of the second regular vehicle booking, as described above with reference to the ninth event S109.

In response to detecting ending of a vehicle access event of the second regular vehicle booking, the access handling unit 9 at a fourteenth event S114 removes vehicle access from the user of the second regular vehicle booking.

No data communication between vehicle 5 and central access management server 4 is required for removing vehicle access from the user of the second booking.

The method for obtaining vehicle access described above with reference to figure 5 rely on a functional long-range wireless data communication between vehicle 5 and central access management server 4 for downloading the booking data from the central access management server 4 to the vehicle. However, this method for obtaining vehicle access merely represents one example embodiment for obtaining access to the vehicle, and the present disclosure is not limited to this example embodiment. For example, according to another example embodiment, the first and/or second user may alternatively obtain vehicle access based on the method described in publication WO 2025/031219 A1, which enables the first and second users to obtain vehicle access also without an updated local booking schedule in the vehicle, i.e. without a booking for the first and/or second user being pre-stored in the local vehicle booking schedule. The booking data associated with first booking may instead be downloaded from the central access management server 4 to the user equipment 8 of the first user in connection with the booking event of the first booking, and subsequently submitted from the user equipment 8 of the first user to the access handling unit 9 of the vehicle in connection with requesting vehicle access to the vehicle 5. In some example embodiments, the vehicle does not even include a local booking schedule at all.

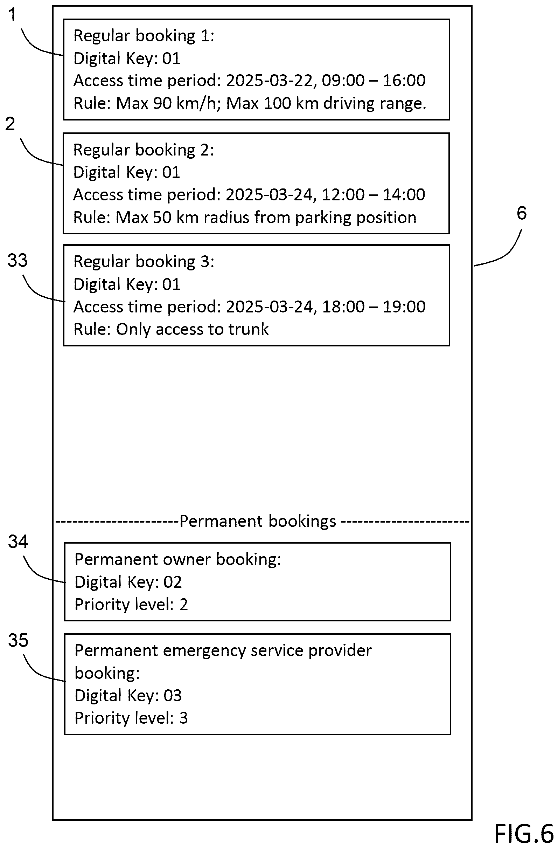

With reference to figure 6, the vehicle digital access management system may further include a dedicated digital key associated with the owner of the vehicle, e.g. an owner booking 34. In some example embodiments, the digital key of the owner has higher priority than the digital key of the regular bookings 1, 2, i.e. users that are borrowing the vehicle, thereby enabling the owner to always get access to the vehicle. For example, the digital key of the owner may have priority level 2 and regular bookings may have priority level 1, which is a lower priority level that level 2. Alternatively, the digital key of the owner may have the same priority as the digital key of the regular bookings 1, 2.

The digital key of the owner booking may have a first identify and the digital key of the regular bookings 1, 2 may have a second identity, i.e. not the same identity as the first identity.

The digital key of the owner be stored in the data memory 7 of the access handling unit 9 of the vehicle as permanent owner booking 34 of the booking schedule 6. Alternatively, the digital key of the owner booking 34 be stored as a permanent booking in a separate form, e.g. a separate folder/structure/schedule/list, or the like.

The access handling unit 9 may grant access to the user equipment of the owner, i.e. the digital key stored in the user equipment of the owner, offline, i.e. without requiring data communication between vehicle 5 and the central access management server 4.

With reference to figure 6, the vehicle digital access management system may further include a dedicated digital key associated with an emergency service provider, such as police, fire department, ambulance, vehicle rescue assistance, or the like. In some example embodiments, the digital key of such an emergency service provider has higher priority than the digital key of the regular booking, i.e. users that are borrowing the vehicle, thereby enabling the emergency service provider to always get access to the vehicle. For example, the digital key of the emergency service provider may have priority level 2 and regular bookings may have priority level 1. Alternatively, the digital key of the emergency service provider may have the same priority as the digital key of the regular booking.

In some example embodiments, the digital key of the emergency service provider may have a higher priority than the digital key of the owner booking, such that the emergency service provider always has access to the vehicle. For example, the digital key of the owner may have priority level 2 and the digital key of the emergency service provide may have priority level 3, which is higher priority than priority level 2.

The digital key of the emergency service provider may have a third identify and the digital key of the regular bookings may have a second identity, i.e. not the same identity as the third identity.

The digital key of the emergency service provider be stored in the data memory system 7 of the access handling unit 9 of the vehicle as permanent booking 35 of the booking schedule 6. Alternatively, the digital key of the emergency service provider may be stored as a permanent booking 35 in a separate form, e.g. a separate folder/structure/schedule/list, or the like.

A permanent emergency service provider booking 35 does not have any specific booking time information, it is simply valid all times until further notice. The same applies to a permanent owner booking 34.

The term permanent herein means that the emergency service provider booking and/or owner booking are continuously and always available for the emergency service provider booking and/or owner without requiring performing a dedicated booking for each access event. The permanent emergency service provider booking 35 and/or owner booking 34 are permanently available in the data memory system 7 of the vehicle 5, except before initial setup and reconfiguration events and the like.

The access handling unit 9 may grant access to the user equipment of the emergency service provider, i.e. the digital key stored in the user equipment of the emergency service provider, offline, i.e. without requiring data communication between vehicle 5 and the central access management server 4.

With reference to figure 6, each individual vehicle booking may include various types of vehicle usage limitations, i.e. one or more limitation rules, that apply for each booking respectively, For example, the first booking 1 may have a limitation rule stating that the vehicle is not allowed to drive faster than 90 km/h and that a total driving range is limited to 100 km. According to a further example embodiment, the second booking 2 may have a limitation rule stating that the vehicle is not allowed to leave a driving space defined by 50 km radius from the parking position. According to yet a further example embodiment, a third booking 33 may have a limitation rule of limiting vehicle access to the trunk. These types of limitation rules apply for each booking individually.

According to a further example embodiment, the vehicle may have one or more limitation rule that apply to all vehicle regular bookings 1, 2, 33, such as for example obeying the general traffic rules of each specific country, e.g. not driving faster than local speed limit, using seat belts, not drive against red traffic light, etc. These types of limitation rules apply for all regular bookings.

The vehicle digital access management system may thus according to some example embodiments be configured to remove vehicle access from current user in response to violation of limitation rule of the vehicle regular booking 1, 2, 33 or in response to violation of a general vehicle rule. Such a removal of vehicle access in response to detecting a violation of vehicle limitation rule may be performed offline, i.e. without requiring data communication between vehicle 5 and the central access management server 4.

For example, if a booking limitation rule, or a general vehicle limitation rule, states that the vehicle is not allowed leave the country, and the user of a regular booking attempts to steal the vehicle by driving abroad, the vehicle will detect the violation of the geographical driving range based on for example data input from the vehicle GPS-receiver, and in response thereto remove vehicle access from the current user.

In case the user of the regular booking 1, 2, 33 attempts to incapacitating or disturbing the vehicle GPS-receiver, the vehicle may nevertheless detect a violation of the geographical driving range based on for example data input from vehicle camera or/or lidar sensor data, which may be used for determining vehicle position without use of GPS-receiver data.

In other words, the booking data of the first regular vehicle booking 1 may include at least one predetermined vehicle use limitation rule, and the local access handling unit 9 may be configured to automatically perform an offline removal of vehicle access from the first regular vehicle booking 1 upon detecting violation of the at least one predetermined vehicle use limitation rule of the first regular vehicle booking 1.

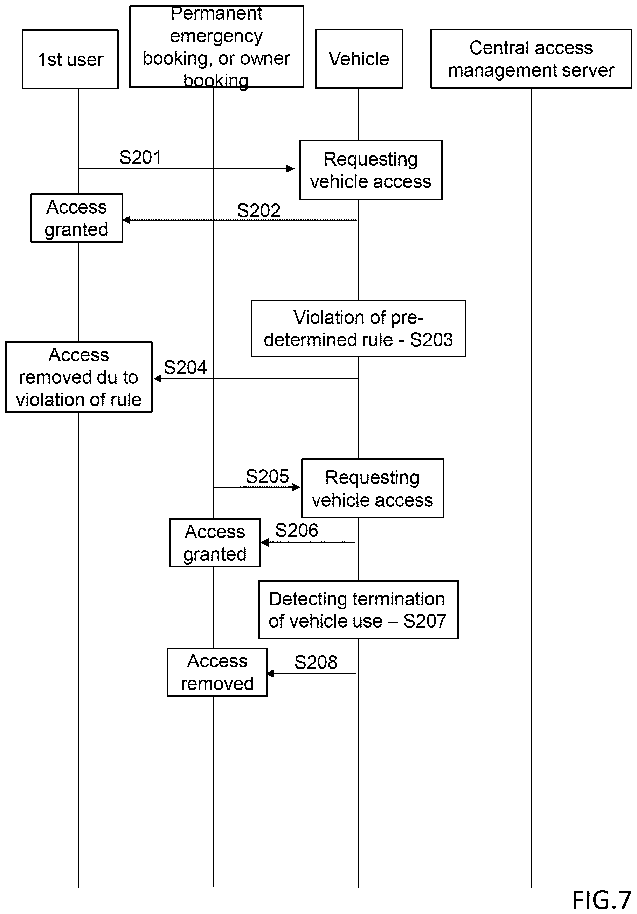

Figure 7 illustrates schematically the process of offline removal of vehicle access from a regular vehicle booking due to violation of a predetermined vehicle use limitation rule of the booking data of the first regular vehicle booking. It is assumed that the first user has arranged with a valid first booking, as descried with reference to events S101-S103 in figure 5.

Subsequently, at a first event S201 the first user 3 arrives at the vehicle 5 and the user equipment 8 of the first user 3 establishes a digital wireless communication channel with the vehicle 5 and the access handling unit 9 of the vehicle authenticates the digital key stored in a data memory system 23 of the user equipment 8 by means of a vehicle digital key stored in the data memory system 7 of the vehicle 5.

In response to a positive authentication of the digital key of the user equipment 8 of the first user 3 (first booking), the vehicle access handling unit 9 at a second event S202 gives access to the user of the first booking.

No communication with the central access management server 4 is required for giving the user of the first booking access to the vehicle. In other word, the vehicle access is given offline to the user of the first booking.

Thereafter, at a third event S203, the local access handling unit 9 detects a violation of a predetermined vehicle use limitation rule of the first regular vehicle booking stored in the data memory system, and in response thereto performs an offline removal of vehicle access from the first regular vehicle booking at a fourth event S204.

This removal of access to the vehicle in response to a violation of a pre-determined rule may result in that the vehicle being parked remotely from the vehicle home position and must be transported back to the vehicle home location by for example an emergency service provider in form a tow truck, or by means of the owner colleting the vehicle. In such a scenario, the emergency service provider or owner arrives at the vehicle 5 at a fifth event S205 and the user equipment 8 of the emergency service provider or owner establishes a digital wireless communication channel with the vehicle 5 and the access handling unit 9 of the vehicle authenticates the digital key of the emergency service provider or owner stored in a data memory system 23 of the user equipment 8 by means of the vehicle digital key of the permanent owner booking or permanent emergency service provider booking stored in the data memory system 7 of the vehicle 5.

In response to a positive authentication of the digital key of the user equipment 8 of the emergency service provider or owner, the vehicle access handling unit 9 at a sixth event S206 gives access to the emergency service provider or owner.

No communication with the central access management server 4 is required for giving the emergency service provider or owner access to the vehicle.

The data memory system 7 may thus be configured to store booking data of a permanent vehicle owner booking including a digital key, and the local access handling unit 9 is configured to perform an offline grant of vehicle access to the vehicle owner booking upon detecting a digital key of the user equipment 8 by means of the short-range wireless communication device 12 and verifying that the detected digital key authorizes vehicle access based on the digital key of the permanent vehicle owner booking stored in the data memory system 7. As a result, the vehicle owner may have a separate permanent booking, such that the vehicle owner does not need to submit a booking for using the vehicle. The vehicle owner can simply use the vehicle any time when the vehicle is free/non-booked.

With respect to the digital key of the emergency service provider, one solution may be to provide at least one user equipment of each emergency service provider with a digital key of all relevant vehicles in a certain region or country, such that the emergency service provider can get offline access to the vehicle upon arrival at the vehicle. However, this requires a large data memory system 23 of the user equipment 8.

According to an alternative solution, each emergency service provider has the digital key of all relevant vehicles in a certain region or country stored on a local data memory, such as a local computer or the like, and the user equipment 8 is configured to download the required digital key from the local computer onto the user equipment 8 of the emergency service provider before leaving the home station, such that the emergency service provider can get offline access to the vehicle upon arrival at the vehicle.

Still more alternative, the central access management server 4 may be configured to, upon receiving a request from emergency service provider, such as police, fire brigade, ambulance, vehicle roadside/recovery service, etc., for providing access to a specific vehicle, send a digital key to the user equipment 8 of the emergency service, such that such that the emergency service provider can get access to the vehicle upon arrival at the vehicle based on the permanent emergency service provider booking stored in the data memory system 7 of said specific vehicle 5. However, this requires an operable long-range data communication channel between the central access management server 4 and the emergency service provider.

The access handling unit 9 subsequently at a seventh event S207 detects ending of a vehicle access event of the emergency service provider or owner, as described above with reference to the ninth event S109, and in response thereto, the access handling unit 9 at an eight event S208 removes vehicle access from the emergency service provider or owner.

No data communication between vehicle 5 and central access management server 4 is required for removing vehicle access from the emergency service provider or owner.

In other words, in some example embodiments of the vehicle digital access management system, the data memory system is configured to store booking data of at least one permanent emergency service provider booking including a digital key, wherein the local access handling unit is configured to automatically perform an offline grant of vehicle access to the at least one emergency service provider booking upon detecting a digital key of the user equipment by means of the short-range wireless communication device and verifying that the detected digital key authorizes vehicle access based on the digital key of the permanent emergency service provider booking stored in the data memory system.

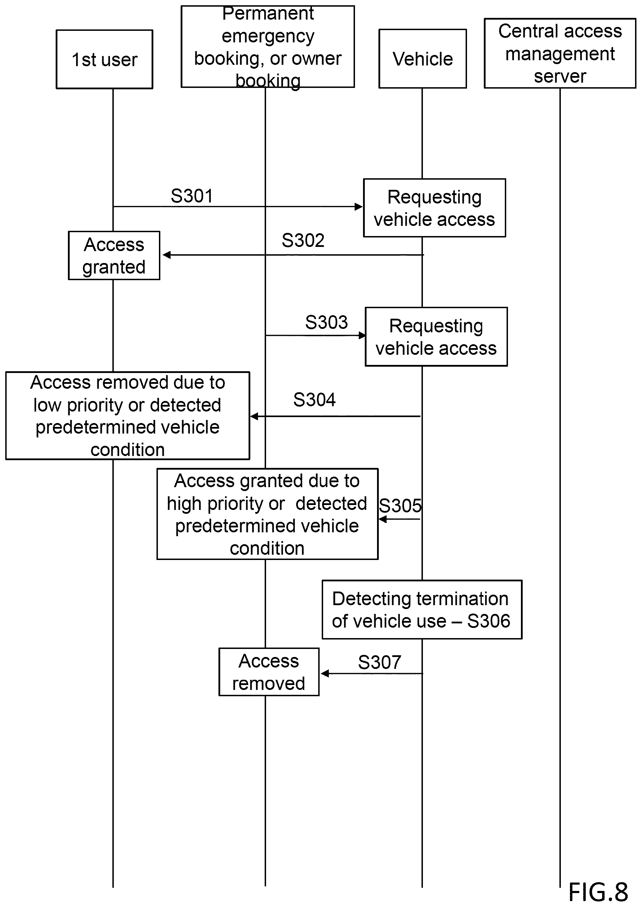

Figure 8 illustrates schematically the process of offline removal of vehicle access from a regular vehicle booking due to higher priority of the emergency service provider booking or owner booking compared with the priority of the first regular vehicle booking. It is assumed that the first user has arranged with a valid first booking, as descried with reference to events S101-S103 in figure 5.

At the first and second events S301, S302 the first user 3 obtains offline access to the vehicle, as descried with reference to events S201-S202 in figure 7.

Thereafter, at a third event S303, a user of an emergency service provider or the owner arrives at the vehicle 5 and the user equipment 8 of the user of the emergency service provider or the owner establishes a digital wireless communication channel with the vehicle 5 and the access handling unit 9 of the vehicle authenticates the digital key stored in a data memory system 23 of the user equipment 8 of the emergency service provider or the owner by means of the vehicle digital key of the emergency service provider booking or owner booking stored in the data memory system 7 of the vehicle 5.

In response to a positive authentication of the digital key of the user equipment 8 of the user of an emergency service provider or the owner, and upon detecting the higher priority of the associated emergency service provider booking or owner booking over the priority of the first booking (first user), the vehicle access handling unit 9 at a fourth event S304 removes access from the first booking, and directly thereafter at the fifth event S305 gives access to the user equipment 8 of the user of an emergency service provider or the owner.

No communication with the central access management server 4 is required for removing the access from the user of the first booking or for giving access to the emergency service provider or the owner. In other word, the shift in vehicle access from the first user to the of an emergency service provider or the owner is performed offline.

This takeover of vehicle access may for example be useful in event of a vehicle accident, where the emergency service provider wants to have access to the vehicle.

The access handling unit 9 may subsequently at a sixth event S306 detect ending of the vehicle access event of the emergency service provider or owner, as described above with reference to the ninth event S109, and in response thereto, the access handling unit 9 at a seventh event S307 removes vehicle access from the emergency service provider or owner.

No data communication between vehicle 5 and central access management server 4 is required for removing vehicle access from the emergency service provider or owner.

In other words, in some example embodiments of the vehicle digital access management system, the at least one permanent emergency service provider booking has a higher priority than a regular vehicle booking, and the local access handling unit is configured to upon detecting a digital key of a user equipment by means of the short-range wireless communication device and performing an offline verification that the detected digital key authorizes vehicle access based on the digital key of the permanent emergency service provider booking stored in the data memory system, and performing an offline shift of vehicle access from the current regular vehicle booking to the at least one emergency service provider booking based on the higher priority of the at least one permanent emergency service provider booking.

The above-described offline shift in vehicle access from the first booking to the emergency service provider booking or owner booking, as described with reference to the third to fifth events S303-S305 above, may alternatively be triggered based on detection of a certain vehicle predetermined event based condition, such as a vehicle crash event, a vehicle theft event, vehicle unauthorized use event, a vehicle operational failure event, a vehicle driver sickness event, a vehicle out-of-fuel/charge event, or the like. Such detection of vehicle condition may be performed by the vehicle itself using various sensor input or user input via vehicle interface or user equipment user interface, and the vehicle access handling unit 9 may subsequently arrange with a shift in vehicle access from the first booking to the emergency service provider booking or owner booking when the vehicle short-range wireless communication device 12 detects the user equipment 8 of the emergency service provider or the owner.

No data communication between vehicle 5 and central access management server 4 is required for removing vehicle access from the emergency service provider or owner.

In other words, in some example embodiments of the vehicle digital access management system, the local access handling unit is configured to, upon detecting occurrence of a predetermined event based condition and subsequently detecting a digital key of a user equipment by means of the short-range wireless communication device that authorizes vehicle access based on the digital key of the permanent emergency service provider booking stored in the data memory system, performing an offline shift of vehicle access from the current regular vehicle booking to the at least one emergency service provider booking.

In some example embodiment, the time period between detecting an occurrence of a predetermined event-based condition and subsequently detecting a digital key of a user equipment by means of the short-range wireless communicate, may be about maximal 5 hours, or the like.

In some example embodiments, the identity of the digital key of the at least one permanent emergency service provider booking is different from the identity of the digital key of a regular vehicle booking. This is generally required for enabling spontaneous access to the vehicle without a vehicle booking, because the unique digital key of the at least one permanent emergency service provider booking enables the vehicle to distinguish the at least one permanent emergency service provider booking from a regular booking.

The same applies to the owner booking. In other words, the identity of the digital key of the owner booking may be different from the digital key of the at least one permanent emergency service provider booking, and also different from the identity of the digital key of a regular vehicle booking. This enables the access handling unit 9 to distinguish the digital key of the vehicle owner from the digital key of the at least one permanent emergency service provider booking and a regular booking.

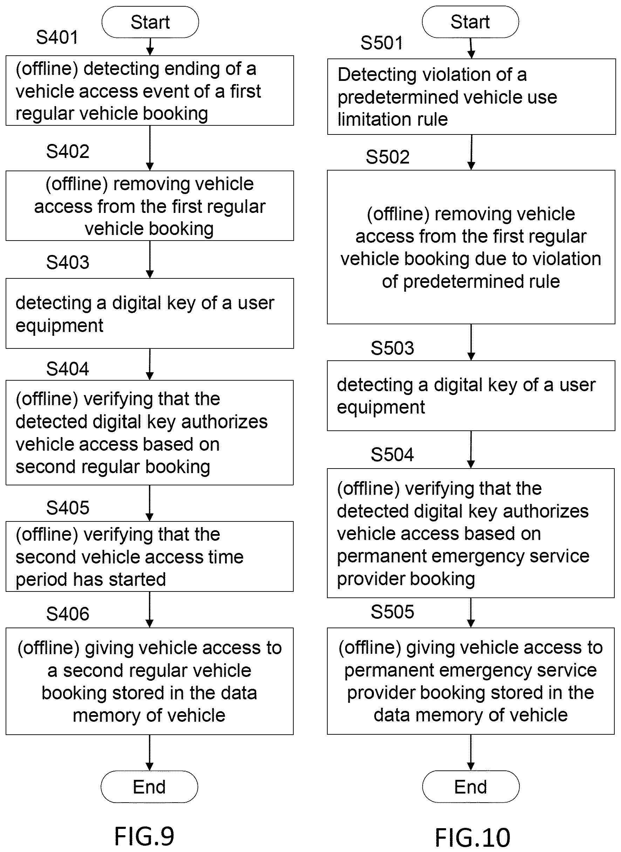

The present disclosure also relates to a method for managing a vehicle digital access system. A basic example embodiment of this method is described below with reference to figure 9, wherein a first step S401 involves detecting ending of a vehicle access event of a first regular vehicle booking stored in a data memory system located in the vehicle based on input from at least one vehicle access sensor or a user interface, or based on ending of the first vehicle access time period stored in the data memory system. The method further comprises a second step S402, which includes performing an offline removal of vehicle access from the first regular vehicle booking by means of a local access handling unit located in the vehicle. The method further comprises a third step S403, which includes detecting a digital key of a user equipment by means of a short-range wireless communication device located in the vehicle, and a fourth step S404 of verifying that the detected digital key authorizes vehicle access based on the digital key of the second booking stored in a data memory system located in the vehicle. The method further comprises a fifth step S405, which includes verifying that the second vehicle access time period stored in the data memory system has started, and a sixth step S406 of giving offline vehicle access to a second regular vehicle booking stored in the data memory system by the local access handling unit.

In some example embodiments, the step of performing an offline removal of vehicle access from the first regular vehicle booking by means of a local access handling unit located in the vehicle may be triggered by a prior step of detecting a violation of at least one predetermined vehicle use limitation rule of the first regular vehicle booking stored in the data memory system. In other words, the first regular vehicle booking stored in the data memory system may have an associated vehicle use limitation rule, such as a maximal speed and/or maximal range, or the like. In such event, upon detecting a violation of said predetermined vehicle use limitation rule of the first regular vehicle booking, the local access handling unit performs an offline removal of vehicle access from the first regular vehicle booking as a direct consequence of the violation of said predetermined vehicle use limitation rule.

Moreover, in the event of removal of vehicle access from the first regular vehicle booking in response to a violation of a predetermined vehicle use limitation rule, an emergency service provider may need access to the vehicle for handling the situation.

For example, the vehicle may be stranded far away from home and may need tow car or vehicle assistance for bring to the vehicle back to the home position.

Consequently, with reference to figure 10, the method of the disclosure may include a first step S501 of detecting violation of a predetermined vehicle use limitation rule. In response thereto, the method involves a second step S502 of offline removal of vehicle access from the current regular booking. Then, at a third step S503 the emergency service provider has arrived, and the vehicle detects a digital key of a user equipment of the emergency service provider. At a fourth step S504, the method involves verifying that the detected digital key authorizes vehicle access based on the digital key of the permanent emergency service provider booking stored in the data memory system. Then, at a fifth step S505, the method includes performing an offline grant of vehicle access to the at least one emergency service provider booking by the local access handling unit.

In addition, the method may include a step of performing an offline shift of vehicle access from the current regular vehicle booking to the at least one emergency service provider booking by the local access handling unit based on a higher priority of the at least one permanent emergency service provider booking compared with a regular vehicle booking, or based on detecting occurrence of a predetermined event based condition.

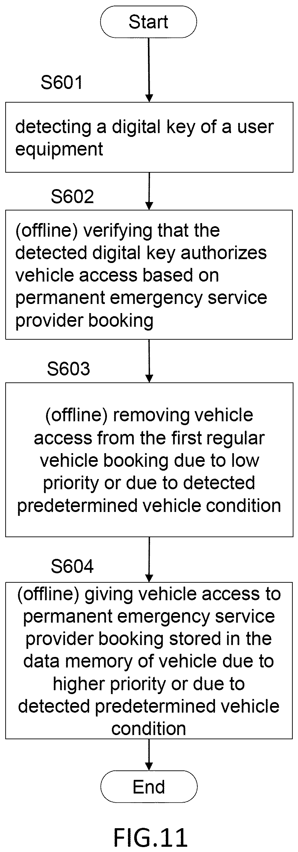

Consequently, with reference to figure 11, the method of the disclosure may include a first step S601 of detecting a digital key of a user equipment by means of the short-range wireless communication device. In response thereto, the method involves a second step S602 of performing an offline verification that the detected digital key authorizes vehicle access based on the digital key of the permanent emergency service provider booking stored in the data memory system. At a third step S603, the method involves performing an (offline) removal of vehicle access from the first regular vehicle booking due to higher priority of the emergency service provider or due to a detected predetermined vehicle condition, and at the subsequent fourth step S604, the method includes performing an offline grant of vehicle access to the at least one emergency service provider booking by the local access handling unit based on a higher priority of the at least one permanent emergency service provider booking compared with a regular vehicle booking or based on detecting occurrence of a predetermined event based condition.

For the purpose of providing the user equipment of the emergency service provider with a digital key that matches a vehicle to be assisted, the method may according to some example embodiments include a step of receiving a request in the central access management server from emergency service provider for providing access to a specific vehicle. The method further includes a subsequent step of sending a digital key of the permanent emergency service provider booking stored in the data memory system of said specific vehicle from the central access management server to a user equipment of said emergency service provider. As a result, the emergency service provider may be granted access to the specific vehicle based on the permanent emergency service provider booking stored in the data memory system of said specific vehicle.

In some example embodiments, the vehicle owner wants to have access to the vehicle without requiring a booking for getting access to the vehicle. This may be accomplished by means of a permanent vehicle owner booking stored in the data memory system of the vehicle. Consequently, in some example embodiments, the method comprises detecting a digital key of a user equipment by means of the short-range wireless communication device, and subsequently verifying that the detected digital key authorizes vehicle access based on a digital key of a permanent vehicle owner booking stored in the data memory system, and thereafter performing an offline grant of vehicle access to the vehicle owner booking by the local access handling unit.

The processors, processing unit, or control units described herein may include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

The data memory systems described herein may include for example a read only memory (ROM), a random-access memory (RAM), a register, cache memory, semiconductor memory devices, magnetic media such as internal hard disks and removable disks, magneto-optical media, and optical media such as CD-ROM disks, and digital versatile disks (DVDs).

The short-range wireless communication device 12, 25 of the vehicle and user equipment 8 may be a standardized wireless local area network such as a Wireless Local Area Network, WLAN, Bluetooth, ZigBee, Ultra-Wideband, Radio Frequency Identification, RFID, or similar network.

The long-range wireless communication device 24, 30 of the vehicle 5 and user equipment 8 may be a standardized wireless wide area communication network, such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network.

The methods or flow charts provided herein may be implemented in a computer program, software, or firmware incorporated in a computer-readable storage medium for execution by a general-purpose computer or a processor. Examples of computer-readable storage mediums include a read only memory (ROM), a random-access memory (RAM), a register, cache memory, semiconductor memory devices, magnetic media such as internal hard disks and removable disks, magneto-optical media, and optical media such as CD-ROM disks, and digital versatile disks (DVDs).

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made, and equivalents may be substituted for elements thereof without departing from the scope of the present disclosure as defined in the claims. Furthermore, modifications may be made to adapt a particular situation or material to the teachings of the present disclosure without departing from the essential scope thereof. Although discussed above as methods described by the flowchart of Figures 9 to 11, it should be appreciated that one or more operations may be omitted from the methods discussed, or that one or more operations may be added to the methods discussed. Further, the operations may be performed in any order and do not necessarily imply an order as provided. Rather, the methods discussed are merely one embodiment of the present disclosure as contemplated.

Therefore, it is intended that the present disclosure is not limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

1. First regular booking
2. Second regular booking
3. First user
4. Central server
5. Vehicle
6. Booking schedule
7. Local vehicle data memory system
8. User equipment (UE)
9. Local access handling unit
10. Processing unit
11. Data memory
12. Short-range wireless communication device
13. Short-range wireless communication
14. Vehicle access sensors
15. Vehicle door sensor
16. vehicle trunk sensor
17. Vehicle frunk sensor
18. Vehicle passenger occupancy sensor
19. Vehicle door locking system
20. Vehicle propulsion motor control system
21. Electronic processing unit of UE
22. Interface of UE
23. Data memory system of UE
24. Long-range communication device of UE
25. Short-range communication device of UE
26. Processing unit of server
27. Data memory of server
28. Long-range communication device of server
29. User interface of vehicle
30. Long-range wireless communication device of vehicle
31. Long-range wireless data communication
32. Long range communication channel
33. Third regular booking
34. Owner permanent booking
35. Emergency service provider permanent booking

## Claims

1. A vehicle digital access management system comprising:
a data memory system (7) located in the vehicle (5) and configured to store booking data of a first regular vehicle booking (1) including a digital key and a first vehicle access time period, and booking data of a second regular vehicle booking (2) including a digital key and a second vehicle access time period,
a short-range wireless communication device (12) located in the vehicle (5) and configured for establishing wireless communication with a user equipment (8);
a local access handling unit (9) located in the vehicle (5),
wherein the local access handling unit (9) is configured to perform an offline removal of vehicle access from the first regular vehicle booking (1) upon detecting that a vehicle access event of the first regular vehicle booking (1) has ended based on input from at least one vehicle access sensor (14) or a user interface (22, 29), or that the first vehicle access time period stored in the data memory system has ended, and
wherein the local access handling unit (9) is configured to subsequently give an offline vehicle access to the second regular vehicle booking (2) upon detecting a digital key of the user equipment (8) by means of the short-range wireless communication device (12), verifying that the detected digital key authorizes vehicle access based on the digital key of the second booking stored in the data memory system, and verifying that the second vehicle access time period stored in the data memory system has started.

2. The vehicle digital access management system according to claim 1, wherein an identity of the digital key of the first regular vehicle booking (1) is the same as the identity of the digital key of the second regular vehicle booking (2).

3. The vehicle digital access management system according to any of the preceding claims,
wherein the booking data of the first regular vehicle booking (1) further includes at least one predetermined vehicle use limitation rule, and wherein the local access handling unit (9) is configured to perform an offline removal of vehicle access from the first regular vehicle booking upon detecting violation of the at least one predetermined vehicle use limitation rule of the first regular vehicle booking stored in the data memory system (7); or
wherein the booking data of the second regular vehicle booking (2) further includes at least one vehicle use limitation rule, and wherein the local access handling unit (9) is configured to perform an offline removal of vehicle access from the second regular vehicle booking (2) upon detecting violation of the at least one predetermined vehicle use limitation rule of the second regular vehicle booking (2) stored in the data memory system (7).

4. The vehicle digital access management system according to any of the preceding claims,
wherein the data memory system (7) is configured to store booking data of at least one permanent emergency service provider booking (35) including a digital key,
wherein the local access handling unit (9) is configured to perform an offline grant of vehicle access to the at least one emergency service provider booking (35) upon detecting a digital key of the user equipment (8) by means of the short-range wireless communication device (12) and verifying that the detected digital key authorizes vehicle access based on the digital key of the permanent emergency service provider booking (35) stored in the data memory system (7).

5. The vehicle digital access management system according to claim 4,
wherein the at least one permanent emergency service provider booking (35) has a higher priority than a regular vehicle booking (1,2,33), and wherein the local access handling unit (9) is configured to upon detecting a digital key of a user equipment (8) by means of the short-range wireless communication device (12) and performing an offline verification that the detected digital key authorizes vehicle access based on the digital key of the permanent emergency service provider booking (35) stored in the data memory system (7), performing an offline shift of vehicle access from the current regular vehicle booking (1,2,33) to the at least one emergency service provider booking (35) based on the higher priority of the at least one permanent emergency service provider booking (35); or
wherein the local access handling unit (9) is configured to, upon detecting occurrence of a predetermined event based condition and subsequently detecting a digital key of a user equipment (8) by means of the short-range wireless communication device (12) that authorizes vehicle access based on the digital key of the permanent emergency service provider booking (35) stored in the data memory system (7), performing an offline shift of vehicle access from the current regular vehicle booking (1,2,33) to the at least one emergency service provider booking (35).

6. The vehicle digital access management system according to any of the preceding claims 4 to 5, wherein an identity of the digital key of a regular vehicle booking (1,2,33) is different from the identity of the digital key of the at least one permanent emergency service provider booking (35).

7. The vehicle digital access management system according to any of the preceding claims, wherein the data memory system (7) is configured to store booking data of a permanent vehicle owner booking (34) including a digital key, and wherein the local access handling unit (9) is configured to perform an offline grant of vehicle access to the vehicle owner booking (34) upon detecting a digital key of the user equipment (8) by means of the short-range wireless communication device (12) and verifying that the detected digital key authorizes vehicle access based on the digital key of the permanent vehicle owner booking (34) stored in the data memory system (7).

8. The vehicle digital access management system according to any of the preceding claims 4 to 7, wherein the central access management server (4), upon receiving a request from emergency service provider for providing access to a specific vehicle (5), is configured for sending a digital key of the permanent emergency service provider booking (35) stored in the data memory system (7) of said specific vehicle (5) to a user equipment (8) of said emergency service provider.

9. The vehicle digital access management system according to any of the preceding claims, wherein the at least one vehicle access sensor (14) is configured for detecting that a vehicle access event of the first regular vehicle booking (1) has ended is a vehicle door sensor (15), vehicle luggage compartment sensor (15,16), a vehicle passenger occupancy sensor (18), a key detector sensor.

10. A vehicle comprising the vehicle digital access management system according to any of the preceding claims.

11. A method for managing a vehicle digital access system comprising:
detecting ending of a vehicle access event of a first regular vehicle booking (1) stored in a data memory system (7) located in the vehicle (5) based on input from at least one vehicle access sensor (14) or a user interface (22,29), or based on ending of the first vehicle access time period stored in the data memory system (7),
performing an offline removal of vehicle access from the first regular vehicle booking (1) by means of a local access handling unit (9) located in the vehicle (1),
detecting a digital key of a user equipment (8) by means of a short-range wireless communication device (12) located in the vehicle (1), verifying that the detected digital key authorizes vehicle access based on the digital key of the second booking (2) stored in a data memory system (2) located in the vehicle (1), and verifying that the second vehicle access time period stored in the data memory system (12) has started,
giving offline vehicle access to a second regular vehicle booking (2) stored in the data memory system (7) by the local access handling unit (9).

12. The method according to claim 11, wherein the data memory system (7) includes booking data of at least one permanent emergency service provider booking (35) including a digital key, wherein the method comprises detecting a digital key of the user equipment (8) by means of the short-range wireless communication device (12) and verifying that the detected digital key authorizes vehicle access based on the digital key of the permanent emergency service provider booking (35) stored in the data memory system (7), performing an offline grant of vehicle access to the at least one emergency service provider booking (35) by the local access handling unit (9).

13. The method according to claim 12,
wherein the step of detecting a digital key of a user equipment (8) by means of the short-range wireless communication device (12) and performing an offline verification that the detected digital key authorizes vehicle access based on the digital key of the permanent emergency service provider booking (35) stored in the data memory system (7), performing an offline shift of vehicle access from the current regular vehicle booking (1,2,33) to the at least one emergency service provider booking (35) by the local access handling unit (9) based on a higher priority of the at least one permanent emergency service provider booking (35) compared with a regular vehicle booking (1,2,33); or
detecting occurrence of a predetermined event based condition and subsequently detecting a digital key of a user equipment (8) by means of the short-range wireless communication device (12) that authorizes vehicle access based on the digital key of the permanent emergency service provider booking (35) stored in the data memory system (7), performing an offline shift of vehicle access from the current regular vehicle booking (1,2,33) to the at least one emergency service provider booking (35).

14. The method according to any of the preceding claims 11 to 13, further comprising:
detecting a digital key of a user equipment (8) by means of the short-range wireless communication device (12),
verifying that the detected digital key authorizes vehicle access based on a digital key of a permanent vehicle owner booking (34) stored in the data memory system (7),
performing an offline grant of vehicle access to the vehicle owner booking (34) by the local access handling unit (9).

15. The method according to any of the preceding claims 11 to 14, further comprising:
receiving a request in the central access management server (4) from emergency service provider or vehicle recovery assistance provider for providing access to a specific vehicle (1),
sending a digital key of the permanent emergency service provider booking (35) stored in the data memory system (7) of said specific vehicle (1) from the central access management server (4) to a user equipment (8) of said emergency service provider or vehicle recovery assistance provider.
